# EUROPEAN PATENT APPLICATION

(11) **EP 4 046 745 A1**
(43) Date of publication of application: **24.08.2022**
(21) Application number: 22157598.8
(22) Date of filing: 18.02.2022
(51) Int. Cl.: B23Q 1/01

(54) **TRACKING LAMINATED RAIL WITH INSERTED TRACK GUIDE**

(30) Priority: 18.02.2021 CA 3109307
(71) Applicant: Norwood Industries, Inc., Oro-Medonte, Ontario L0L 1T0 (CA)
(72) Inventor: DALE, Ashlynne, Oro-Medonte, L0L 1T0 (CA); CABRIT, Sebastien, Oro-Medonte, L0L 1T0 (CA)
(74) Representative: Millburn, Julie Elizabeth

(57) **Abstract**

A laminated rail (18) for a sawmill bed (16) comprises: an outer plate (24) having a middle body portion (27), a top portion (30), and a bottom portion (32); and an inner plate (26) secured to the outer plate (24), the inner plate (26) having a middle body portion (38), a top portion (40), and a bottom portion (41). At least the middle body portion (27, 38) of each of the inner plate (26) and the outer plate (24) has a cross sectional configuration having multiple obtuse angles along a vertical axis of the laminated rail (18) and the middle body portion (38) of the inner plate (26) is matingly received by the middle body portion (27) of the outer plate (24). A channel (56) may be formed between the top portion (40) of the inner plate (26) and the top portion (30) of the outer plate (24), the channel (56) being shaped and dimensioned to receive and secure a track (58) in a sandwich grip within the channel (56).

## Description

### FIELD OF THE INVENTION

The present invention relates to a tacking laminated sawmill bed rail. The sawmill rail also defines an inset rail guide to receive a track.

### CROSS-REFERENCE TO RELATED APPLICATIONS

This application claims priority from Canadian application no. 3109307, filed February 18, 2021.

### BACKGROUND OF THE INVENTION

Portable sawmills provide the user with the flexibility to process logs into planks without having to rely on a large mill for processing. In addition, portable sawmills can be easily moved and set up, which allows users to process logs near where they are harvested, or on site where the resulting lumber is needed.

A number of portable sawmills have been described in the art, for example, US Patent No. 5,784,941, US Patent No. 4,275,632, US Patent No. 4,300,428, US Patent No. 4,235,140, US Patent No. 3,926,086, US Patent No. 4,245,535, and Canadian patent application 2,541,734 to the present applicant.

US Patent No. 5,243,892 discloses a portable sawmill with a frame base and an inverted U-shaped frame, supported by a carriage rolling along side tracks defined by the frame base. US Patent No. 4,640,170 discloses a portable saw mill with a frame that surrounds the log. US Patent 4,307,641 describes a portable sawmill comprising two skid rails, vertical support members, a pair of guide rails. US Patent No. 3,695,316 only uses one guide rail. Canadian Patent No. 1,200,180 describes a portable saw mill comprising a frame with a guide rail and a carriage moveable along the guide rail. US Patent No. 4,210,049 describes an "x" frame for holding a log, with a chain saw affixed to the frame in cantilever position for cutting logs crosswise. The log is held in the nook of the "x" frame.

To produce useful lumber, cuts must be straight and planar. This requires, at a minimum, a rigid, linear base to the sawmill, in the form of guide rails. The guide rails must resist/cope with many forces. During milling, complex forces, both rotary, vertical and horizontal can result in substantial and undesired force on the mill, potentially resulting in reduction in efficiency, reduction in accuracy and quality of the cut, and an increase in wear on the saw blade and sometimes its drive assembly and motor. In a portable sawmill, the mill base will be subjected to unwanted forces while being lifted, moved and placed. Between the weight of the sawmill carriage assembly and the large logs that are processed, components of the sawmill need to withstand a number of internal and external forces that are generated during milling.

This requires the components, and particularly those of the bed, sometimes referred to as a log deck, that act to stabilize the entire sawmill, to ideally have high compressive strength, tensile strength, torsional strength, and/or flexural strength. Portable sawmills are typically relatively large, complex and heavy structures constructed of heavy gauge steel utilizing multiple precision welds. The requirement for heavy gauge steel and precision welds adds costs, which is undesirable. There is a need in the industry to reduce cost and complexity of manufacture, while also increasing the strength of certain components of the portable sawmill.

### SUMMARY OF THE INVENTION

According to the invention there is provided a laminated rail for a sawmill bed, the laminated rail comprising: an outer plate having a middle body portion, a top portion, and a bottom portion; an inner plate secured to the outer plate, the inner plate having a middle body portion, a top portion, and a bottom portion.

According to a first aspect of the invention, there is provided a laminated rail for a sawmill bed, the laminated rail comprising: an outer plate having a middle body portion, a top portion, and a bottom portion; and an inner plate secured to the outer plate, the inner plate having a middle body portion, a top portion, and a bottom portion; wherein at least the middle body portion of each of the inner plate and the outer plate has a cross sectional configuration having multiple obtuse angles along a vertical axis of the laminated rail and the middle body portion of the inner plate is matingly received by the middle body portion of the outer plate.

There may be a channel formed between the top portion of the inner plate and the top portion of the outer plate, the channel being shaped and dimensioned to receive and secure a track in a sandwich grip within the channel. There may be a track secured within the channel.

The cross-sectional configuration may be a zig-zag pattern. The cross-sectional configuration may have multiple reflex angles and multiple obtuse angles along a vertical axis of the laminated rail.

The outer plate and the inner plate may be secured together with fasteners. There may be multiple fasteners longitudinally along the length of the laminated rail.

There may be an upper lip extending outwardly from the top portion of the outer plate in a direction away from the inner plate. There may be a lower flange extending from the bottom portion of the outer plate in a direction toward the inner plate. There may be an upper flange extending outwardly from the top portion of the inner plate in a direction away from the outer plate. There may be a lower flange extending from the bottom portion of the inner plate in a direction away from the outer plate.

According to the invention, there is also provided a method of manufacturing a laminated rail for a sawmill bed according to the first aspect of the invention, the method comprising: roll forming an outer plate having a middle body portion, a top portion, and a bottom portion; roll forming an inner plate having a middle body portion, a top portion, and a bottom portion; and securing the outer plate to the inner plate to form the laminated rail, wherein at least the middle body portion of each of the inner plate and the outer plate has a cross sectional configuration having multiple obtuse angles along a vertical axis of the laminated rail and the middle body portion of the inner plate is matingly received by the middle body portion of the outer plate.

According to a second aspect of the invention, there is provided a laminated rail for a sawmill bed, the laminated rail comprising: an outer plate having a middle body portion, a top portion, and a bottom portion; an inner plate secured to the outer plate, the inner plate having a middle body portion, a top portion, and a bottom portion; wherein a channel is formed between the top portion of the inner plate and the top portion of the outer plate and the laminated rail further comprises a track secured within the channel, the channel being shaped and dimensioned to receive and secure the track in a sandwich grip within the channel.

According to an embodiment, there is provided a laminated rail for a sawmill bed, the laminated rail comprising: an outer plate having a middle body portion, a top portion, and a bottom portion; and an inner plate secured to the outer plate, the inner plate having a middle body portion, a top portion, and a bottom portion; wherein a channel is formed between the top portion of the inner plate and the top portion of the outer plate and the laminated rail further comprises a track secured within the channel, the channel being shaped and dimensioned to secure the track in a sandwich grip within the channel without the need for welding or other fastening means.

At least the middle body portion of each of the inner plate and the outer plate may have substantially the same cross sectional configuration and the middle portion of the inner plate may be matingly received by the middle portion of the outer plate.

At least the middle body portion of each of the inner plate and the outer plate may have a cross sectional configuration having multiple obtuse angles along a vertical axis of the laminated rail and the middle body portion of the inner plate may be matingly received by the middle body portion of the outer plate.

The cross-sectional configuration may be a zig-zag pattern. The cross-sectional configuration may have multiple reflex angles and multiple obtuse angles along a vertical axis of the laminated rail.

The outer plate and the inner plate may be secured together with fasteners. There may be multiple fasteners longitudinally along the length of the laminated rail.

There may be an upper lip extending outwardly from the top portion of the outer plate in a direction away from the inner plate. There may be a lower flange extending from the bottom portion of the outer plate in a direction toward the inner plate. There may be an upper flange extending outwardly from the top portion of the inner plate in a direction away from the outer plate. There may be a lower flange extending from the bottom portion of the inner plate in a direction away from the outer plate.

According to the invention, there is also provided a method of manufacturing a laminated rail for a sawmill bed according to the second aspect of the invention, the method comprising: roll forming an outer plate having a middle body portion, a top portion, and a bottom portion; roll forming an inner plate having a middle body portion, a top portion, and a bottom portion; forming a channel between the top portion of the inner plate and the top portion of the outer plate, the channel being shaped and dimensioned to receive and secure a track in a sandwich grip within the channel, and securing the outer plate to the inner plate with the track sandwiched in the channel to form the laminated rail.

According to the invention there is provided a sawmill bed comprising a laminated rail according to the invention. According to the invention there is also provided a sawmill comprising the sawmill bed. Where the laminated rail comprises an upper lip extending outwardly from the top portion of the outer plate in a direction away from the inner plate, the sawmill may have a wheel assembly comprising a main wheel and a control arm, the control arm extending downwards to a down portion, the down portion having a control wheel extending inwards, wherein the main wheel is configured to move along the track, and the control wheel is configured to engage with the upper lip.

### BRIEF DESCRIPTION OF THE DRAWINGS

Reference will now be made, by way of example, to the accompanying drawings which show example embodiments of the present application, and in which:
Figure 1 is perspective view of an exemplary sawmill;
Figure 2 is a perspective view of a rail according to an embodiment of the invention;
Figure 3 is a cross section view of the bed rail shown in Figure 1;
Figure 4 is cross section view of the bed rail shown in Figure 1 engaged with a cross bunk of the bed of a sawmill;
Figure 5 is a cross section view as shown in Figure 4 with a wheel assembly from a sawmill carriage assembly mounted on a track that is secured in the rail; and
Figure 6 is a cross section view as shown in Figure 4 with a different version of a wheel assembly from a sawmill carriage assembly mounted on a track that is secured in the rail.

### DESCRIPTION OF EXAMPLARY EMBODIMENTS

The following detailed description of the embodiment(s) is merely exemplary in nature and is in no way intended to limit the invention, its application, or uses. While but a single embodiment of the present invention has been herein shown and described, it will be understood that various changes may be made without departing from the scope of the invention.

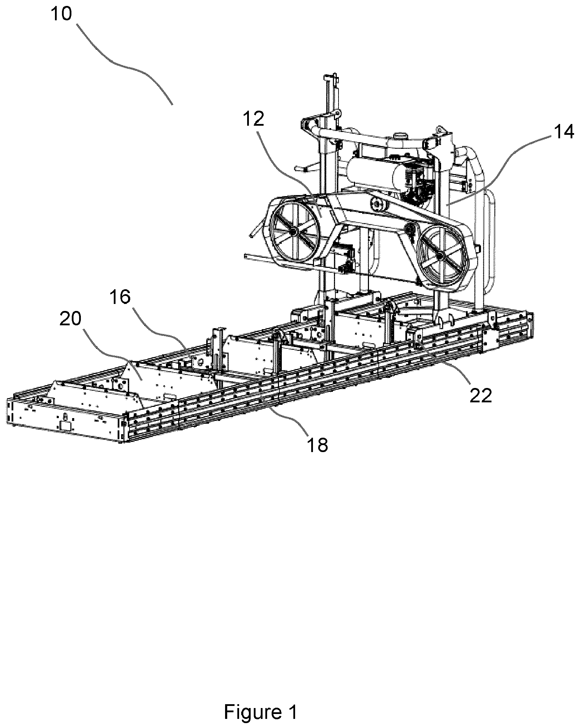

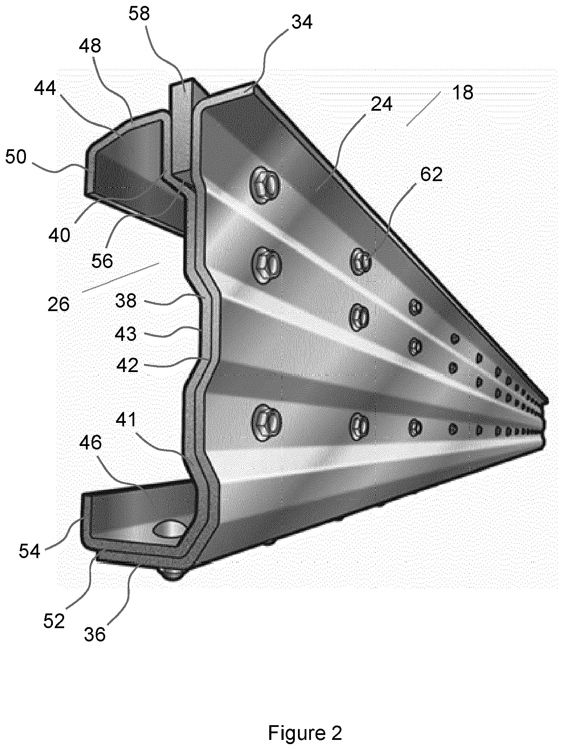

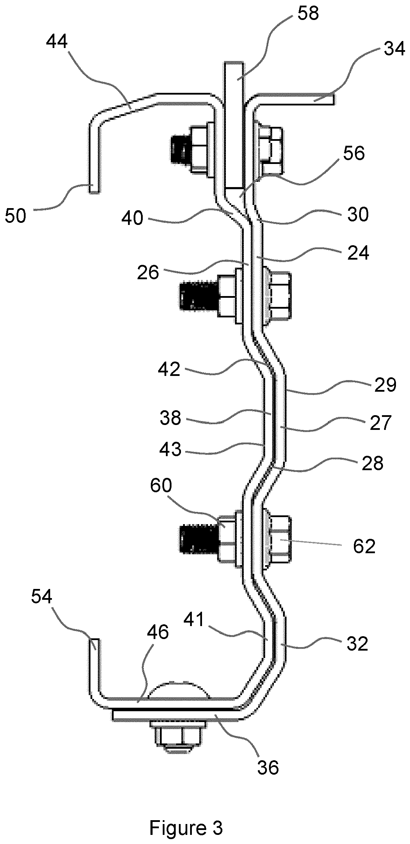

The present application is generally directed to a rail 18, such as the exemplary embodiment shown in Figures 2 and 3. While the rail 18 will be discussed herein as being a longitudinal support of a sawmill bed that could be incorporated into the exemplary portable sawmill as shown in Figure 1, it is to be understood that the rail disclosed herein may serve other portable sawmills.

Figure 1 illustrates an exemplary portable sawmill 10, which typically comprises a sawmill bandsaw assembly 12 mounted on a sawmill carriage assembly 14. The sawmill carriage assembly 14 is moveably fixed to a sawmill bed 16. The sawmill bed 16 may be made up of longitudinal supports that form rails 18, which are braced by cross bunks 20 for additional strength and stability. The lower portion of the sawmill carriage assembly 14 can have wheel assemblies 22 that when mounted on the rails 18, allow the sawmill carriage assembly 14 to roll along the sawmill bed 16. In use, the sawmill bed 16 receives and secures a log, such that the log extends longitudinally along the length of the sawmill bed 16. The sawmill carriage assembly 14 moves along the length of sawmill bed 16, and thus, the length of the log, thereby allowing the sawmill bandsaw assembly 12 to mill the log into lumber.

Referring to Figures 2 and 3, the rail 18 comprises an outer plate 24 and an inner plate 26. The outer plate 24 and inner plate 26 have substantially similar cross sections along their vertical portions that allow for a mating connection between the two plates 24, 26, with the inner plate 26 nesting within the outer plate 24.

The outer plate 24 has a middle body portion 27 flanked by a top portion 30 and a bottom portion 32. The outer plate 24 has an inner face 28 that ultimately communicates with the inner plate 26, and an outer face 29. In one embodiment, an upper lip 34 extends outwardly from the outer face 29 of the top portion 30 of the outer plate 24. Preferably the upper lip 34 extends substantially perpendicularly from the general plane of the body portion 27 as can be seen in Figure 3. The upper lip 34 can serve various functions, including helping to secure and stabilize a sawmill carriage assembly to the rail 18. In another embodiment, a lower flange 36 extends outwardly from the inner face 28 of the bottom portion 32 of the outer plate 24. Preferably, the lower flange 36 extends in the opposing direction to the upper lip 34, and is substantially perpendicular to the general plane of the body portion 27 as can be seen in Figure 3. As can be seen in Figures 2 and 3, the lower flange 36 helps the outer plate 24 to matingly receive the inner plate 26.

The inner plate 26 has a middle body portion 38 flanked by a top portion 40 and a bottom portion 41. The inner plate 26 has an outer face 42 that ultimately communicates with the outer plate 24, and an inner face 43. In one embodiment, an upper flange 44 extends inwardly towards the center of the sawmill bed from the inner face 43 of the top portion 40 of the inner plate 26. Optionally, in another embodiment, a lower flange 46 extends inwardly towards the center of the sawmill bed from the inner face 43 of the bottom portion 41 of the inner plate 26, i.e. on the same side of the inner plate 26 as the upper flange 44. The lower flange 46 on the inner plate serves as an additional point of contact to secure the outer plate 24 to the inner plate 26.

Flanges 44, 46 also act as stiffeners, which add rigidity to the sawmill bed 16. Therefore, the skilled worker will understand that they may manifest themselves in multiple shapes provided that they are able to perform this function.

For example, as can be seen in Figures 2 and 3, the upper flange 44 has a base projection 48 that extends outwardly away from the general vertical plane of the inner plate 26, with the projection 48 terminating with a hook portion 50 that extends substantially downward back toward the body portion 38 of the inner plate 26. The projection 48 can be linear, which in combination with the hook portion 50 would produce a generally "L" shaped cross section for the upper flange 44. However, as seen in the Figures, the projection 48 may have one or more bends contained therein. It is contemplated that the cross section of the upper flange 44 could have other shapes, such as an arcuate shape.

The lower flange 46 preferably has a simpler structure, as at least a portion of the lower flange 46 is matingly received by the lower flange 36 extending from the outer plate 24. In the embodiment of the lower flange 46 shown in Figures 2 and 3, there is a substantially flat base projection 52 that extends horizontally inwardly towards the center of the sawmill bed and away from the general vertical plane of the plates 24, 26, with the projection 52 terminating with a vertical flange 54 that extends substantially upwards back toward the body portion 38 of the inner plate 26, thereby producing a substantially "L" shaped cross section, which provides improved rigidity.

If the lower flange 46 were to have a more complex shape, this would be reflected in the shape of the lower flange 36 extending from the outer plate 24 so that it could still matingly receive the lower flange 46 to facilitate securing the two plates 24, 26 together.

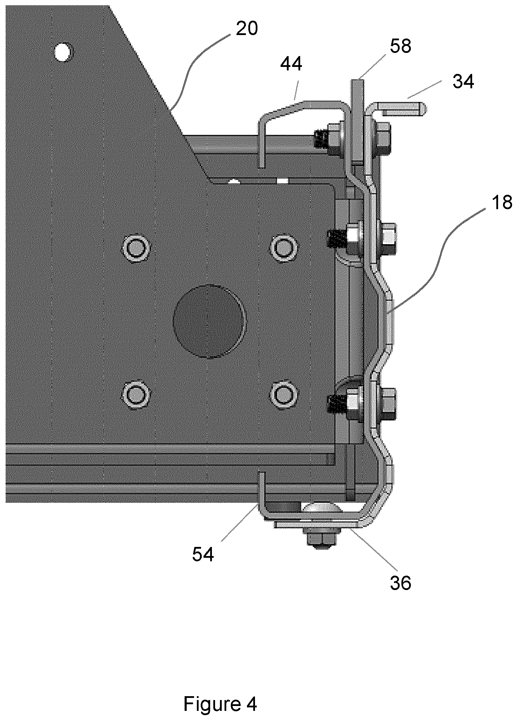

In addition, flanges 44, 46 provide surfaces to connect the rail 18 to other parts of the mill. For example, Figures 4-6 illustrate one use of an embodiment of the rail 18 as described herein. The rail 18 is shown as an assembled component of a sawmill bed 16, in which it is attached to cross bunk 20. In this embodiment, the hook 50 and vertical flange 54 connect with and secure the rail 18 to the cross bunk 20. Alternatively, or in addition to, the rail 18 fastens to the cross bunks 20 via an L-bracket or corner bracket 68.

The cross sectional configuration of the body portion 27 of the outer plate 24 and the body portion 38 of the inner plate 26 are substantially the same to facilitate nesting of the inner plate 26 in the outer plate 24. In one embodiment, the cross sections of the body portions 27, 38 are substantially planar. However, according to an embodiment, the cross sections of body portions 27, 38 are substantially non-linear. For example, the cross sections of body portions 27, 38 may have a wave pattern or a zig-zag pattern. Alternatively, the embodiment shown in Figure 3 is substantially a tacking pattern in which the peaks are extended with generally flat portions.

In this context, a tacking pattern includes a pattern in which the metal of the plates 24, 26 is repeatedly angled in order for the body portion 27, 38 to progress from the bottom portion to the top portion. The multiple angles are not restricted to just right angles, but can include reflex angles and obtuse angles, or any combination thereof. The distance between angled portions in the tacking portion may also vary.

The term "tacking" as used herein is based on the use of the term in nautical applications. In the nautical usage, varying, sometimes unpredictable forces of wind and wave are confronted and controlled by use of varied angles of approach and resistance to those forces. In the present usage, varied, sometime unpredictable forces of downwards weight, lateral and horizontal movement of log and sawhead, blade rotation, and at times upwards lifting are confronted using the tacking configuration of varied angles of resistance to those forces. Thus, tacking, as used herein references multiple varying angles, including one or more of obtuse, reflex and right angles, each of which may travel in an inner or outer direction, to create in combination a substantially upright rail.

Preferably, the pattern configuration of the body portions 27, 38 results in the bottom portion and top portion of the plates 24, 26 being substantially planar, or in planes that are parallel to each other.

Including non-linear cross sectional configuration of body portions 27, 38 in the plates 24, 26 of the rail 18 imparts additional strength. The added strength provided by the tacking pattern enables the rail 18 to better further resist forces on all axes, e.g. X, Y and Z. This allows the rail 18 to better withstand torsion and/or compression forces, that arise during operation and transportation of the sawmill.

While the body portions 27, 38 of the inner and outer plates 24, 26 share substantially the same cross section to facilitate nesting of the inner plate 26 in the outer plate 24, in one embodiment, there is some deviation in the cross sections at the top portions 30, 40. As can be seen in Figures 2 and 3, the profile of the cross section of the inner plate 26 at its top portion 40 has a portion that extends a certain distance longer than the corresponding portion at the top portion 30 of the outer plate 24. This deviation in cross section profile ensures that when the inner plate 26 is nested in the outer plate 24, a channel 56 is formed between the top portions 30, 40 of the plates 24, 26. Preferably, this channel 56 runs along the length of the rail 18. The channel 56 serves as a guide that receives a track 58. The width of the channel 56 will reflect the deviation in cross section profiles between the inner and outer plates 24, 26. The channel 56 is sized and dimensioned to secure the track 58 in a squeezing sandwich grip. While the channel 56 is preferably sized and dimensioned to snugly grip the track 58 without necessitating welding or bolting the track 58 in place, other fastening means, such as a nut 60 and bolt 62, can be used to secure the track 58 in the channel 56.

This arrangement, i.e. sandwiching track 58 between two plates 24, 26, is a fundamentally different arrangement over the prior art, which provides a stronger stable connection without requiring welding or bolting the track 58 or the like.

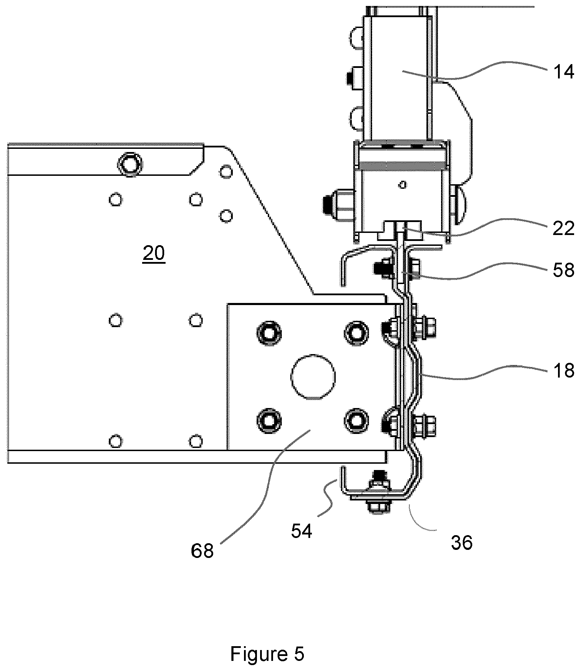

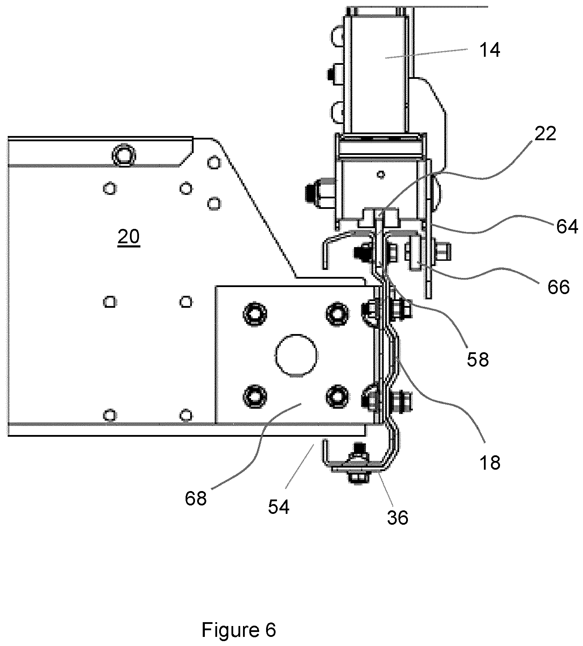

Figures 5 and 6 further illustrate a use of an embodiment of the rail 18 as described herein, in which a wheel assembly 22 of a carriage assembly 14 of a sawmill 10 is mounted onto the track 58. Once mounted, the carriage assembly 14 is able to be moved along the rail 18, which allows the sawmill bandsaw assembly 12 to be moved as desired to mill a log that is secured to the sawmill bed 16.

In Figure 6, a benefit of the upper lip 34 of the outer plate 24 is shown. In this embodiment, the wheel assembly 22 has a downwardly extending control bar 64 that terminates with a retaining portion 66. When the carriage assembly 14 is mounted on the rail 18, the retaining portion 66 of the wheel assembly 22 is placed under the upper lip 34, and serves to secure the wheel assembly 22, and thereby the carriage assembly 14, to the rail 18. This could be done by e.g. sliding the wheel assembly 22 over the end of the rail 18. While the retaining portion 66 is shown as a wheel, the upper lip 34 could also serve to secure the wheel assembly 22 to the rail 18 if the retaining portion 66 took other forms that could serve as a stop so that the carriage cannot go flying off the rails.

The type, structure and material of construction for the rail 18 is not particularly limiting. Preferably, the rail 18 is made of steel, such as stainless steel, carbon steel, or alloy steel. However, it is contemplated that with the increased strength created by the laminated rail, different materials could also be used such as aluminum.

The inner plate 26 and the outer plate 24 may be attached to each other by any suitable means known in the field. For example, Figure 3 shows that nuts 60 and bolts 62 are used to affix the plates together. Further, appropriate threaded apertures could, for example, be formed in one or more of the plates to receive bolts, thereby obviating the need for nuts. Alternatively, rivets may be used to affix the inner and outer plates together, or other means, such as adhesives, a weld, or the like, may be used.

While the plates 24, 26 of the rail can be fabricated in a number of ways, such as bending the metal of the plates with a brake, or by extrusion of the plates, according to one embodiment, the plates 24, 26 are preferably made through roll forming. Roll forming is a type of rolling involving the continuous bending and often thinning of a long strip of sheet metal (typically coiled steel) into a desired cross-section. The strip passes through sets of rolls mounted on consecutive stands, each set performing only an incremental part of the bend, until the desired cross-section (profile) is obtained.

Roll forming is ideal for producing constant-profile parts that have abnormal cross sections, such as the plates 24,26 of the rail 18 as defined herein.

Roll forming is, among the manufacturing processes, one of the simplest. It typically begins with a large coil of sheet metal, supported on an uncoiler. The strip is fed through an entry guide to properly align the material as it passes through the rolls of the mill, each set of rolls forming a bend until the material reaches its desired shape. Roll sets are typically mounted one over the other on a pair of horizontal parallel shafts supported by a stand(s). Side rolls and cluster rolls may also be used to provide greater precision and flexibility and to limit stresses on the material. The shaped strips can be cut to length ahead of a roll forming mill, between mills, or at the end of the roll forming line. Once the plates 24, 26 have been fabricated, they are connected together to form the laminate rail 18.

Unlike the prior art, the laminated structure of the rail 18 in conjunction with the non-linear nature of the cross section of the plates 24, 26 instills improved strength, rigidity, and stability. Furthermore, the design of the rail 18 can avoid the time and expense of welding, with the possibility of using lighter weight materials, as compared to carriage assemblies of the prior art. This reduces fabrication and shipping costs.

In addition, the centering of the track 58 is in the middle of the rail 18, rather than locating the track offset from the primary vertical plane of the rail 18, which results in the weight of carriage assembly 14 being placed substantially over the rail 18. Thus, less material is required to construct the sawmill 10, and the sawmill carriage assembly 14 will likely be better balanced and supported.

The scope of the claims should not be limited by the preferred embodiments set forth in the examples, but should be given the broadest interpretation consistent with the description as a whole.

## Claims

1. A laminated rail (18) for a sawmill bed (16), the laminated rail (18) comprising:
an outer plate (24) having a middle body portion (27), a top portion (30), and a bottom portion (32); and
an inner plate (26) secured to the outer plate (24), the inner plate (26) having a middle body portion (38), a top portion (40), and a bottom portion (41);
wherein at least the middle body portion (27, 38) of each of the inner plate (26) and the outer plate (24) has a cross sectional configuration having multiple obtuse angles along a vertical axis of the laminated rail (18) and the middle body portion (38) of the inner plate (26) is matingly received by the middle body portion (27) of the outer plate (24).

2. A laminated rail (18) according to claim 1, wherein a channel (56) is formed between the top portion (40) of the inner plate (26) and the top portion (30) of the outer plate (24), the channel (56) being shaped and dimensioned to receive and secure a track (58) in a sandwich grip within the channel (56).

3. A laminated rail (18) according to claim 2, further comprising a track (58) secured within the channel (56).

4. A laminated rail (18) for a sawmill bed (16), the laminated rail (18) comprising:
an outer plate (24) having a middle body portion (27), a top portion (30), and a bottom portion (32); and
an inner plate (26) secured to the outer plate (24), the inner plate (26) having a middle body portion (38), a top portion (40), and a bottom portion (41);
wherein a channel (56) is formed between the top portion (40) of the inner plate (26) and the top portion (30) of the outer plate (24) and the laminated rail further comprises a track (58) secured within the channel (56), the channel (56) being shaped and dimensioned to receive and secure the track (58) in a sandwich grip within the channel (56).

5. A laminated rail (18) according to claim 4, wherein at least the middle body portion (27, 38) of each of the inner plate (26) and the outer plate (24) has substantially the same cross sectional configuration and the middle portion (38) of the inner plate (26) is matingly received by the middle portion (27) of the outer plate (24).

6. A laminated rail (18) according to any of claims 1 to 3 and 5, wherein the cross-sectional configuration is a zig-zag pattern.

7. A laminated rail (18) according to any of claims 1 to 3, 5 and 6, wherein the cross-sectional configuration has multiple reflex angles and multiple obtuse angles along a vertical axis of the laminated rail (18).

8. A laminated rail (18) according to any of claims 1 to 7, wherein the outer plate (24) and the inner plate (26) are secured together with fasteners (60, 62).

9. A laminated rail (18) according to any of claims 1 to 8, further comprising multiple fasteners (60, 62) longitudinally along the length of the laminated rail (18).

10. A laminated rail (18) according to any of claims 1 to 9, further comprising one or more of:
an upper lip (34) extending outwardly from the top portion (30) of the outer plate (24) in a direction away from the inner plate (26);
a lower flange (36) extending from the bottom portion (32) of the outer plate (24) in a direction toward the inner plate (26);
an upper flange (44) extending outwardly from the top portion (40) of the inner plate (26) in a direction away from the outer plate (24), and
a lower flange (46) extending from the bottom portion (41) of the inner plate (26) in a direction away from the outer plate (24).

11. A sawmill bed (16) comprising a laminated rail (18) according to any of claims 1 to 10.

12. A sawmill (10) comprising the sawmill bed (16) according to claim 11.

13. A sawmill (10) according to claim 12 wherein the laminated rail (18) comprises an upper lip (34) extending outwardly from the top portion (30) of the outer plate (24) in a direction away from the inner plate (26), the sawmill (10) further comprising a wheel assembly (22) comprising a main wheel and a control arm (64), the control arm extending downwards to a down portion, the down portion having a control wheel (66) extending inwards, wherein the main wheel is configured to move along the track, and the control wheel (66) is configured to engage with the upper lip (34).

14. A method of manufacturing a laminated rail (18) according to claim 1, the method comprising:
roll forming an outer plate (24) having a middle body portion (27), a top portion (30), and a bottom portion (32);
roll forming an inner plate (26) having a middle body portion (38), a top portion (40), and a bottom portion (41); and
securing the outer plate (24) to the inner plate (26) to form the laminated rail (18),
wherein at least the middle body portion (27, 38) of each of the inner plate (26) and the outer plate (24) has a cross sectional configuration having multiple obtuse angles along a vertical axis of the laminated rail (18) and the middle body portion (38) of the inner plate (26) is matingly received by the middle body portion (27) of the outer plate (24).

15. A method of manufacturing a laminated rail (18) according to claim 4, the method comprising:
roll forming an outer plate (24) having a middle body portion (27), a top portion (30), and a bottom portion (32);
roll forming an inner plate (26) having a middle body portion (38), a top portion (40), and a bottom portion (41);
forming a channel (56) between the top portion (40) of the inner plate (26) and the top portion (30) of the outer plate (24), the channel (56) being shaped and dimensioned to receive and secure a track (58) in a sandwich grip within the channel (56), and
securing the outer plate (24) to the inner plate (26) with the track (58) sandwiched in the channel (58) to form the laminated rail (18).
